# EUROPÄISCHE PATENTANMELDUNG

(11) **EP 1 464 760 A2**
(43) Veröffentlichungstag der Anmeldung: **06.10.2004**
(21) Anmeldenummer: 04007312.4
(22) Anmeldetag: 26.03.2004
(51) Int. Cl.: E02B 3/10

(54) **Erdwall mit Rasendeckung, insbesondere Deich**

(30) Priorität: 27.03.2003 DE 10313974
(71) Anmelder: Graul, Niklas-Simon, Dipl.-Med., 02708 Lawalde (DE)
(72) Erfinder: Graul, Niklas-Simon, Dipl.-Med., 02708 Lawalde (DE)
(74) Vertreter: Ilberg, Roland W., Dipl.-Ing.

(57) **Zusammenfassung**

Bei einem Erdwall mit Rasendeckung, insbesondere Deich, ist im Deichinneren ein fest gegründeter, stabilisierender Kern (6) angeordnet und zwischen der Deckschicht (2) des Erdwalls und dem Kern (6) ist deckschichtnah im Deichmaterial (5) eine Elektromatte (3) und eine Sperrfolie (4) angeordnet.

## Beschreibung

Die Erfindung betrifft einen Erdwall mit Rasendeckung, insbesondere einen Deich. Rasenbekleidete Erdwälle mit einer Hochwasserschutzfunktion werden am Meer, an Seen, Strömen und Flüssen längs niedrig gelegener, überflutungsgefährdeter Ländereien angelegt.

Hingegen dominieren an flutgefährdeten städtischen Flussufern transportable, aus aneinandergesetzten Spundwänden bestehende Barrieren.

Aufgrund ihrer Begrünung und ihres relativ flachen Böschungsanstiegs, der insbesondere zur Wasserseite ausgeprägt ist, um dem Wasserdruck besser standzuhalten, fügen sich rasengedeckte Erdwälle meistens ohne größere Probleme in die Landschaft ein. Die zum Deichbau dienende Erde wird dem Vorland entnommen und schichtenweise aufgebracht und verfestigt. Um ein Austrocknen und Ablösen von Erde zu verhindern, werden die Böschungen mit Rasensohden, Klee oder Luzerne gepflanzt.

Beschädigungen des Deiches müssen womöglich im ersten Entstehen ausgebessert werden, weil bei schwellendem Wasser, welches die beschädigten Stellen angreift, die Schadstellen meist reißend schnell wachsen. Erreicht das Wasser die Deichkrone, so müssen die zu niedrigen Stellen rasch erhöht werden, denn die kleinste Verletzung der Krone durch überfließendes Wasser hat sonst fast immer einen Deichbruch zur Folge.

Um einen Deich schnell partiell zu erhöhen ist es bekannt, ihn mit Sandsäcken aufzustocken. Dies kann aber immer nur ein Provisorium in Zeiten unmittelbarer Not sein. Denn einen Wall aus Sandsäcken zu errichten, ist schwere körperliche Arbeit und bedarf vieler Hände. Vor allem ist er niemals absolut dicht zu bekommen. Eigentlich müsste das gesamte Deichprofil belegt werden, denn die Deichhöhe wird auf das bestehende Deichprofil zugeschnitten und eine weitere Erhöhung bedeutet erhöhten Wasserdruck gegen den Deich und erhöhten Druck der Sandsäcke auf den Deichsockel. Doch für eine flächendeckende Belegung mit Sandsäcken reichen in Zeiten akuter Gefahr weder Material, Kräfte noch Zeit aus.

Auch wenn die erhöhte Deichkrone nicht überflutet wird, ist die Gefahr eines Wassereinbruchs noch lange nicht gebannt, denn durch stehendes, bewegtes oder drückendes Wasser über Tage oder gar Wochen droht der Deich durchzuweichen, aufzuquellen, auszuspülen und zu brechen. Dass diese Drohung ganz real besteht, zeigten die Deichbrüche in den Augusttagen des Jahres 2002 in Deutschland. Besonders verheerend sind Grundbrüche, bei denen ein Deich bis zu seiner Sohle weggespült wird und Strombrüche, bei denen auch das Vorland zerstört wird.

Einen recht wirksamen provisorischen Schutz gegen Durchweichung bietet das Sichern des Deiches mit Kunststoff-Folien. Hierfür ist es bekannt, dass bei drohender Gefahr unzählige Helfer Folien auf dem Deich auslegen und mit Sandsäcken gegen Fortwehen, Auftrieb und Fortschwemmen beschweren. Steht das Wasser bereits den Deich hoch, müssen Taucher zur Hilfe gerufen werden, die die Folie unter Wasser verlegen und gleichfalls mit Sandsäcken sichern. Da Fluten regelmäßig stark verschmutztes Wasser führen, ist die Sicht unter Wasser auf wenige Zentimeter begrenzt, was die Arbeiten sehr erschwert. Außerdem muss immer damit gerechnet werden, dass Treibgut und gesundheitsgefährdende Schwemmteile die Helfer und Taucher bedrohen. Die Sicherungsarbeiten sind also nicht nur zeitlich sehr aufwendig und mühevoll, sondern auch riskant für die Einsatzkräfte. Sie sind auch riskant für den Deich, denn normalerweise ist es streng verboten, einen Deich mit Ausnahme eigens hierzu befestigter Deichkronen zu betreten, um seine Standfestigkeit und sein Profil nicht zu gefährden. Nach überstandener Flut müssen die Schutzfolien vom Deich wieder entfernt werden, um zu verhindern, dass die Deichvegetation nicht unterhalb der Folie abstirbt. Gras und andere kleinwüchsige Pflanzen auf dem Deich haben nämlich die wichtige Aufgabe, mit ihrem Wurzel- und Blattwerk die Deichhaut vor Bodenerosion durch Wind und Wasser zu schützen. Also müssen erneut Einsatzkräfte den Deich in der Hoffnung beklettern, dass er nicht schon soweit aufgeweicht ist, dass die Einsatzkräfte nun auch noch nachhaltig und für die nächste Flut verhängnisvoll Spuren der Beeinträchtigung hinterlassen.

Doch nicht nur Wasserangriffe, wie über die Deichkrone stürzendes Wasser, lang anhaltender Regen, Wasseraus- und -unterspülungen gefährden Deiche, sondern auch Biber-, Ratten-, Kaninchen, Maulwurf- und Mäusebauten, außerdem Abrutschen der Böschungen infolge Eisgang, extremer Trockenheit oder unerlaubten Begehens usw.

Eine Deichkontrolle und -unterhaltung ist deshalb permanent gefragt und entsprechend kostspielig, wobei insbesondere Beschädigungen des Deichinneren durch Nager und Wühler kaum oder gar nicht festgestellt werden können.

Der Erfindung liegt die Aufgabe zugrunde, einen rasengedeckten Erdwall, insbesondere Deich, anzugeben, der nach menschlichem Ermessen auch stärkeren Belastungen durch stehendes, drückendes und überflutendes Wasser widerstehen kann. Dies soll insbesondere Neubauten betreffen, wobei jedoch eine Ausstattung von Altdämmen gleichermaßen möglich ist.

Erfindungsgemäß ist innerhalb des Erdwalls etwa auf Höhe der Deichsohle ein deichstabilisierender, wasserfester Kern gegründet, der auch dem stärksten zu erwartenden Wasserdruck selbst bei unterspülter, gequollener oder aufgeweichter Erde standhält. Um letztere Gefahren zu minimieren, ist zusätzlich eine Sperrfolie im Abstand zur Dammoberfläche innerhalb des Schutzdammes verlegt. Unterhalb der Sperrfolie oder unmittelbar auf ihrer Unterseite können Feuchtigkeitssensoren installiert sein, die bei Durchfeuchtung Alarmsignale auslösen.

Außerdem ist oberhalb der Sperrfolie ein Stromimpulse führender elektrischer Maschenzaun verlegt, dessen Drähte zwar gegen die Deicherde isoliert sind, beim Versuch von Nagetieren, den Maschenzaun durchzufressen, aber bei durchdrungener Isolierung in blanken Kontakt mit den Nagetieren kommen, wobei dann durch Stromimpulse, wie diese von Weidezäunen bekannt sind, die Nager vom weiteren Vordringen abgehalten werden.

An besonders sensiblen Orten sind Einbauten zu wählen, die von sich aus Wasser und natürlich auch Nagetieren den Weg versperren. Die Deicherde hat dann mehr oder weniger die Aufgabe, die Einbauten naturnahe und fest einzubetten.

Die Erfindung soll anhand eines Ausführungsbeispiels näher erläutert werden. In den zugehörigen Zeichnungen, in denen funktionell vergleichbare Elemente immer dieselben Bezugszeichen tragen, zeigen:
- Fig. 1: eine erste Variante mit einem Beton-Absperrkern im Quer- und Längsschnitt,
- Fig. 2: eine zweite Variante mit pyramidenartigen Betonkernen im Quer- und Längsschnitt,
- Fig. 3: eine dritte Variante mit Stahlträgerbewehrungen als Kern im Quer- und Längsschnitt und
- Fig. 4: eine Abwandlung von Fig. 3.

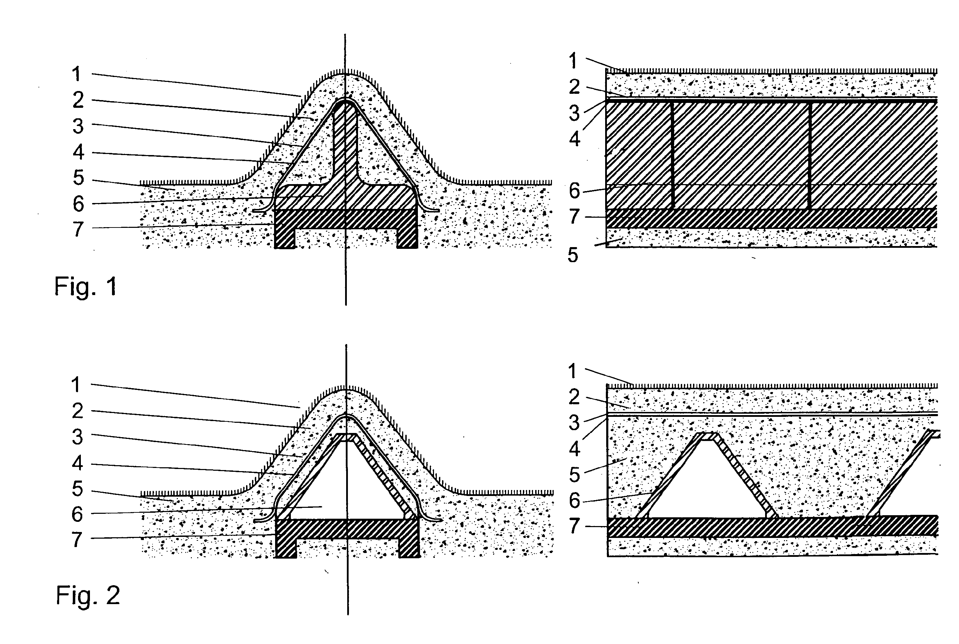

Gemäß Fig. 1 ist ein unbegehbarer und unbefahrbarer Deich mit einem durchgehenden Kern 6 aus Beton verstärkt. Die erdige Deckschicht 2 des Deiches ist oberflächlich mit Rasen 1 bekleidet, um ein Austrocknen und Ablösen der Erde zu verhindern und um eine landschaftliche Anpassung an z. B. eine Flussaue zu erreichen. Als Deichmaterial 5 eignet sich Erde aus dem Vorland, wie fester Ton oder Lehm, mittelfeste Erde oder auch Sand, wobei die Böschungen desto flacher angelegt sein müssen, je weniger Zusammenhalt das Deichmaterial 5 hat. Außerdem ist die äußere Böschung, also die Wasserseite, flacher als die innere zu halten, weil jene den Andrang des Wassers unmittelbar auszuhalten hat. Auf der Landseite genügt es zumeist, wenn das Deichmaterial 5 und seine Bekleidung 1 festliegt. Die Deichkrone ist mindestens 2m breit, auch wenn sie nicht begehbar ausgeführt ist, und ein wenig konvex, um dem Regenwasser Abfluss zu gewähren. In der Prinzipzeichnung sind die Böschungswinkel des Deiches annähernd gleich, Land- und Wasserseite demnach nicht besonders unterschieden.

Innerhalb des Deiches liegt im Deichmaterial 5 eingebettet zunächst eine Elektromatte 3. Die Elektromatte 3 besteht aus isolierten elektrischen Drähten und arbeitet nach dem Weidezaunprinzip. Sie hat die Aufgabe, Biber, Kaninchen, Ratten, Maulwürfe, Mäuse usw. davon abzuhalten, den Deich zu perforieren. Der Abstand der Elektromatte 3 zu den Böschungen und zur Deichkrone liegt zwischen 0,15m und 0,75m, vorzugsweise aber bei 0,25 bis 0,35m. Darüber kann sich das Wurzelwerk des Rasens 1 in der Deckschicht 2 ungehindert verankern.

Unterhalb der Elektromatte 3 liegt eine Sperrfolie 4. Die Sperrfolie 4 ist beispielsweise eine PE-Folie und soll das tiefere Eindringen von Oberflächenwasser in den Deich verhindern. Die Sperrfolie 4 ist verrottungsfest und von vorzugsweise griffiger Struktur, damit die darauf aufgebaute Deckschicht 2 Halt findet. Die Sperrfolie 4 kann ein- oder mehrlagig und ggf. mit Glasfasermaterial armiert sein, um ihre mechanische Festigkeit zu erhöhen und eine standfestere Profilierung zu gewährleisten. Die Sperrfolie 3 kann beispielsweise von großen Rollen längs der zu schützenden Deichpartie maschinell ausgerollt werden. Hierzu wird eine Arbeitsmaschine längs zum Deich, aber außerhalb der Deichschutzzone, fortbewegt und dabei die an einem Arm der Maschine hängende Folienrolle längs einer zu schützenden Deichböschung verlegt.

Unmittelbar oberhalb der Sperrfolie 4, aber noch unterhalb der Elektromatte 3, kann eine Drainageschicht aus Ton und Kies angelegt sein. Unterhalb der Sperrfolie 4 oder direkt auf deren Unterseite können nicht näher dargestellte Feuchtigkeitssensoren angeordnet sein. Mit den Feuchtigkeitssensoren wird die Erdfeuchte zum Beispiel kapazitiv oder ohmsch detektiert. Über elektrische Leitungen oder Funk wird eine Zentrale angesteuert, die die Messwerte analysiert und gegebenenfalls Alarm auslöst. Die Feuchtigkeitssensoren sind längs gefährdeter Dammabschnitte angeordnet. Sie können im Zuge von Leitungen liegen, wobei sowohl die elektrischen Leiterzüge als auch die Feuchtigkeitssensoren selbst mit der Sperrfolie 4 mechanisch verbunden sein können, indem sie z. B. rückwärtig auf die Sperrfolie 4 aufgedruckt sind, wodurch die Verlegarbeiten sich insgesamt sehr vereinfachen. Zur genaueren Datenerfassung können auch mehrere Sensorstrecken in verschiedenen Deichhöhen, von der Deichsohle beginnend bis zur Deichkrone, verlegt sein. Es sind intelligente elektronische Schaltungen bekannt, mit deren Hilfe in einer Zentrale genau angezeigt werden kann, wo sich eventuell Schwachpunkte auftun. Damit entfallen weitgehend Kontrollgänge durch Deichläufer.

Mit der Deichsohle verankert und im Deichmaterial 5 eingebettet sind Betonformlinge 6 zum Stabilisieren des Deiches. Im Beispiel nach Fig. 1 sind die Betonformlinge 6 als auf dem Kopf stehende "T"s ausgebildet, wobei der T-Balken auf einem Fundament 7 ruht und mit diesem mit einem Binder oder mittels Befestigungsbolzen fest verbunden ist. Der senkrechte T-Balken strebt zur Deichkrone auf. Aus dem Längsschnitt ist ersichtlich, dass Formling 6 an Formling 6 gesetzt wird und damit zugleich eine zusätzliche Wassersperre gebildet ist, die auch gegen drückendes Wasser von unten wirkt. Die Abmessungen der Betonformlinge 6 richten sich nach der projektierten Deichhöhe und dem zu erwartenden maximalen Wasserdruck, sowie im geringeren Maße nach den Abmessungen an der Deichsohle.

Die in Fig. 2 dargestellte Variante hat grundsätzlich denselben Aufbau wie nach Fig. 1. Im Unterschied dazu sind hohle, pyramidenstumpfartige Formlinge 6 auf Abstand längs des Deiches auf ein Fundament 7 gesetzt, wobei die Pyramidenstümpfe zur Deichkrone streben. Die Pyramidenstümpfe bilden gemeinsam den festen Kern 6 im Deich, auch wenn sie hohl sind. Es macht nichts aus, sollte in den Pyramidenhohlraum Wasser eindringen, da ein Aufweichen oder Durchweichen nicht stattfindet.

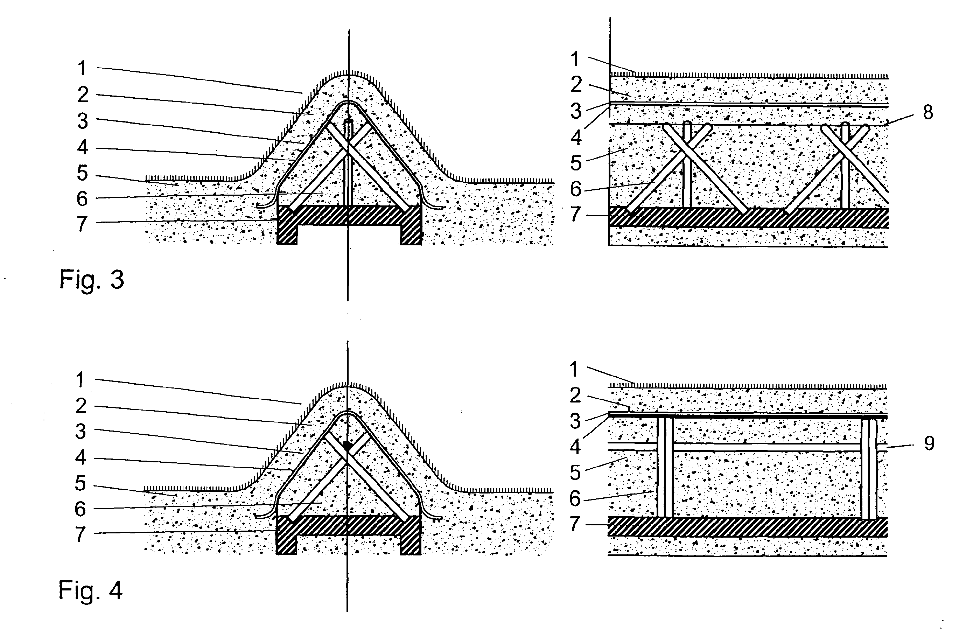

In Fig. 3 und Fig. 4 sind zwei weitere Varianten vorgestellt, bei denen anstelle von Beton-Formlingen Eisenträgerkonstruktionen als Kern 6 in den Deich eingebaut sind. Diese Skelett-Bauart ist wesentlich leichter als eine Massivbauart und empfiehlt sich dort, wo Schwertransporter nicht ohne weiteres hinkommen.

Gemäß Fig. 3 sind jeweils drei korrosionsgeschützte Eisenträger zu einem wigwamartigen Gerüst als stabilisierender Deichkern 6 verschweißt. Das Verschweißen der Eisenträger untereinander kann auf der Baustelle vorgenommen werden. Die Gerüste sind entweder direkt in dem Erdreich auf der Deichsohle gegründet oder auf einem Fundament 7, wie gezeichnet. Untereinander sind die Gerüste zumindest oben zusätzlich mit starken Stahlseilen 8 verspannt. Die untereinander verbundenen Kerne 6 stabilisieren den Deich und treten somit einer Zersetzung und Ausschwemmung von Deichmaterial 5 entgegen, woran auch die Sperrfolie 4 anteilig mitwirkt.

In Fig. 4 sind jeweils zwei Eisenträger kreuzweise miteinander verschweißt und mit dem nächsten Eisenträgerpaar nach Art "spanischer Reiter" mit einem Längsträger verbunden. Die Eisenträger sind wiederum im Untergrund oder auf einem Fundament 7 gegründet.

Die Erfindung ist nicht auf die angegebenen Beispiele beschränkt, weitere Ausgestaltungen im Rahmen der Erfindung sind möglich.

So ist beispielsweise die Ausbildung des Fundaments 7 beliebig, wenn überhaupt ein solches vorgesehen ist. Anstelle der hohlpyramidenartigen Formlinge können hohlprismatische Formlinge aneinandergesetzt werden, die in größerer Bauart auch begehbar sein können. Hohle, oben offene Formlinge 6 in beispielsweise Kübelform können mit Kies oder Erde aufgefüllt sein. Andererseits können an besonders gefährdeten Stellen die Formlinge 6 massiv in Ortbeton gegossen werden. Weiterhin können je nach Deichbreite zwei oder mehr Reihen von Formlingen oder Eisenträgerkonstruktionen einen Stabilisierungskern bilden.

Ein herkömmlich errichteter Deich kann auch nachträglich erfindungsgemäß aufgerüstet werden, doch eignet sich die Erfindung von den Baukosten betrachtet besonders für Neubauten, beispielsweise auch für einen zweiter Hauptdeich, wobei der ältere Deich zur Fürsorge als sogenannter Schlafdeich beibehalten bleibt.

Außer für den Deichbau ist die Erfindung allgemein für stabil auszulegende Erdwälle einsetzbar.

### Bezugszeichen

- 1: Rasenbekleidung
- 2: Deckschicht
- 3: Elektromatte
- 4: Sperrfolie
- 5: Deichmaterial
- 6: Deichkern
- 7: Fundament
- 8: Spanndraht
- 9: Längsverbindungsträger

## Patentansprüche

1. Erdwall mit Rasendeckung, insbesondere Deich,
**dadurch gekennzeichnet,**
**dass** im Inneren ein fest gegründeter, stabilisierender Kern (6) und zwischen der Deckschicht (2) und dem Kern (6) deckschichtnah im Baumaterial (5) eine Elektromatte (3) sowie eine Sperrfolie (4) angeordnet sind.

2. Erdwall nach Anspruch 1,
**dadurch gekennzeichnet,**
**dass** der Kern (6) aus einer Reihe von Betonformlingen gebildet ist, deren Spitzen zur Krone des Erdwalls weisen.

3. Erdwall nach Anspruch 2,
**dadurch gekennzeichnet,**
**dass** der Kern (6) als kopfstehendes "T" ausgeformt ist.

4. Erdwall nach Anspruch 2,
**dadurch gekennzeichnet,**
**dass** der Kern (6) als (hohler) Pyramiden(stumpf)formling ausgeformt ist.

5. Erdwall nach Anspruch 2,
**dadurch gekennzeichnet,**
**dass** der Kern (6) als (hohler) Trapezformling ausgeformt ist.

6. Erdwall nach Anspruch 1 oder 2,
**dadurch gekennzeichnet,**
**dass** ein hohler, oben offener Kern (6) mit Kies oder Erde befüllt ist.

7. Erdwall nach Anspruch 1,
**dadurch gekennzeichnet,**
**dass** der Kern (6) aus Eisenträgerkonstruktionen gebildet ist.

8. Erdwall nach Anspruch 7,
**dadurch gekennzeichnet,**
**dass** der Kern (6) aus sich kreuzenden und miteinander verschweißten Eisenträgern gebildet ist.

9. Erdwall nach Anspruch 7,
**dadurch gekennzeichnet,**
**dass** die Eisenträgerkonstruktionen miteinander durch Stahlseile (8) oder Längsträger (9) verbunden sind.

10. Erdwall nach einem der vorstehenden Ansprüche,
**dadurch gekennzeichnet,**
**dass** der Kern (6) auf einem Fundament (7) gelagert ist.

11. Erdwall nach einem der vorstehenden Ansprüche,
**dadurch gekennzeichnet,**
**dass** der Kern (6) aus zwei oder mehr Reihen von Formlingen oder Eisenträgerkonstruktionen gebildet ist.

12. Erdwall nach Anspruch 1,
**dadurch gekennzeichnet,**
**dass** die Elektromatte aus gepulste Hochspannung führenden, isolierten Drähten besteht.

13. Erdwall nach Anspruch 1,
**dadurch gekennzeichnet,**
**dass** die Sperrfolie (4) glasfaserbewehrt und/oder mehrlagig ist.

14. Erdwall nach Anspruch 1,
**dadurch gekennzeichnet,**
**dass** unmittelbar oberhalb der Sperrfolie (4) eine Drainageschicht angelegt ist.

15. Schutzdamm nach Anspruch 1,
**dadurch gekennzeichnet,**
**dass** die Sperrfolie (4) sowohl die Außen- und Innenböschung als auch die Krone sperrt.

16. Erdwall nach Anspruch 1,
**dadurch gekennzeichnet,**
**dass** die Sperrfolie (4) nur die Außenböschung (Wasserseite) sperrt.

17. Erdwall nach Anspruch 1,
**dadurch gekennzeichnet,**
**dass** unmittelbar oberhalb der Sperrfolie (4), aber noch unterhalb der Elektromatte (3) eine Drainageschicht aus Ton und Kies angelegt ist.

18. Erdwall nach Anspruch 1,
**dadurch gekennzeichnet,**
**dass** unterhalb der Sperrfolie (4) oder direkt auf deren Unterseite Feuchtigkeitssensoren angeordnet sind.

19. Erdwall nach Anspruch 18,
**dadurch gekennzeichnet,**
**dass** die Feuchtigkeitssensoren über elektrische Leitungen oder Funk mit einer Zentrale verbunden sind.
